**Europäisches Patentamt**

**European Patent Office**

**Office européen des brevets**

(19)

(11) Veröffentlichungsnummer: **0 012 308**
**B1**

# (12) EUROPÄISCHE PATENTSCHRIFT

(45) Veröffentlichungstag der Patentschrift:
**19.10.83**

(21) Anmeldenummer: **79104832.5**

(22) Anmeldetag: **03.12.79**

(51) Int. Cl.³: **F 23 D 15/04, F 23 L 15/04**

(54) **Keramischer Brennerkopf zur getrennten Zufuhr von Brenngas und Oxidationsmittel zum Verbrennungsraum.**

(30) Priorität: **09.12.78 DE 2853309**

(43) Veröffentlichungstag der Anmeldung:
**25.06.80 Patentblatt 80/13**

(45) Bekanntmachung des Hinweises auf die Patenterteilung:
**19.10.83 Patentblatt 83/42**

(84) Benannte Vertragsstaaten:
**AT BE CH FR GB IT NL SE**

(56) Entgegenhaltungen:
**AT-B-267 728**
**AT-B-271 697**
**DE-A-1 551 761**
**DE-B-1 551 767**
**DE-B-1 751 538**
**DE-C-357 304**
**DE-C-418 801**
**US-A-1 061 811**
**US-A-1 400 024**
**US-A-3 556 701**

(73) Patentinhaber: **Kernforschungsanlage Jülich**
**Gesellschaft mit beschränkter Haftung, Postfach 1913,**
**D-5170 Jülich (DE)**

(72) Erfinder: **Förster, Siegfried, Dr.-Ing., Ottenfeld 1,**
**D-5110 Alsdorf (DE)**
Erfinder: **Kleemann, Manfred, Dr.-Ing., Im Rauland 147,**
**D-5010 Bergheim (DE)**
Erfinder: **Sack, Berthold, Dipl.-Ing., Am Weissenberg 36,**
**D-5100 Aachen (DE)**

Keramischer Brennerkopf zur getrennten Zufuhr von Brenngas und Oxidationsmittel zum
Verbrennungsraum

Die Erfindung bezieht sich auf einen keramischen Brennerkopf zur getrennten Zufuhr von Brenngas und Oxidationsmittel zum Verbrennungsraum mittels mehreren, im Brennerkopf parallel zueinander geführten und nebeneinander angeordneten, in den Verbrennungsraum mündenden Strömungskanälen für Brenngas und Oxidationsmittel, wobei die Strömungskanäle einen gestreckten Querschnitt aufweisen und paarweise gegeneinander versetzt angeordnet sind. Ein solcher Brennerkopf ist beispielsweise aus der AT-B-271 697 bekannt.

Ein Brennerkopf aus Keramik für Winderhitzer ist beispielsweise aus der DE-AS 2 347 934 bekannt. Bei diesem Brennerkopf wird in einen die Verbrennungsluft führenden Verteilerkanal senkrecht zur Luftströmung über eine Vielzahl von parallel zueinander angeordneten Strömungskanälen Brenngas zugeführt, wobei unmittelbar vor Eintritt des Brenngases in den Verbrennungsraum eine Vermischung des Brenngases mit der Verbrennungsluft angestrebt wird. Der Aufbau eines solchen Brennerkopfes ist verhältnismäßig aufwendig, insbesondere dann, wenn unter Beibehaltung einer gleichmäßigen Verteilung von Brenngas im Oxidationsmittel der Verteilerkanal für die Verbrennungsluft zur Vergrößerung der Brennfläche verbreitert werden soll.

Ein Brennerkopf für hohe Brennerleistung wird in der DE-AS 2 044 813 beschrieben. Bei diesem Brennerkopf ist eine Vielzahl parallel geführter Strömungskanäle für Brenngas und Oxidationsmittel in der Weise nebeneinander angeordnet, daß die Strömungskanäle für das Oxidationsmittel von den Strömungskanälen für das Brenngas umgeben sind. Nachteilig ist der Anschluß der Strömungskanäle an Brenngas oder Oxidationsmittel enthaltende Verteilerkammern. Während die der Zufuhr des Oxidationsmittels dienenden Strömungskanäle unmittelbar von einer Verteilerkammer ausgehen, sind zum Anschluß der Strömungskanäle für das Brenngas zusätzliche Führungen erforderlich, deren Anordnung präzis an die im Brennerkopf vorgesehenen Strömungskanäle für das Brenngas angepaßt werden muß. Herstellung und Montage dieses Brennerkopfes ist daher mit erheblichem Aufwand verbunden.

Zur Erzeugung hoher Brennerleistungen wird eine Vorwärmung von Oxidationsmittel und Brenngas angestrebt. So ist es aus der DE-OS 2 706 043 bekannt, das Brenngas und Oxidationsmittel enthaltende Gasgemisch vor Zutritt zu Brennerplatten in einem rekuperativen Wärmeübertrager durch das vom Brennraum abströmende Abgas vorzuerhitzen. Eine Erwärmung der Verbrennungsluft vor dessen Mischung mit dem Brenngas ist auch aus der DE-OS 2 408 542 bekannt, bei der die Verbrennungsluft als Kühlmittel für aus Metall bestehende Wandungen des Verbrennungsraumes dient. Wünschenswert ist auch die Aufheizung des Brenngases vor einer Vermischung mit dem Oxidationsmittel.

Aufgabe der Erfindung ist es, einen in einfacher Weise herstellbaren Brennerkopf aus Keramik mit getrennter Zufuhr von Brenngas und Oxidationsmittel zum Brennermund zu schaffen, bei dem eine möglichst nahe an den Brennermund heranreichende Vorwärmzone für den Brennstoff und ein leicht handhabbarer Anschluß für die Zufuhrleitungen von Brennstoff und Oxidationsmittel gegeben sind.

Diese Aufgabe wird bei einem Brennerkopf der eingangs erwähnten Art gemäß der Erfindung durch die im Patentanspruch 1 angegebenen Merkmale gelöst. Der Brennerkopf weist Strömungskanäle auf, die jeweils über ihre gesamte Länge die ihnen nebengeordneten Strömungskanäle zu einer die beiden Deckwandungen hin überragen. Zur Bildung von Zuströmöffnungen für Oxidationsmittel oder Brenngas ist ein Teil zumindest einer der Deckwandungen so weit abgesetzt, daß jeweils diejenigen Strömungskanäle geöffnet sind, die ihre benachbarten Strömungskanäle zur abgesetzten Deckwand hin überragen. Die in dieser Weise geöffneten Strömungskanäle sind an ihrer dem Verbrennungsraum abgewandten Stirnseite verschlossen. Die Trennwände zwischen benachbarten Strömungskanälen sind derart ausgebildet, daß ein Wärmeaustausch zwischen Oxidationsmittel und Brenngas erfolgt. Vorteilhaft ist dieser Wärmeaustausch insbesondere dann, wenn flüssige Brennstoffe vor Eintritt in den Verbrennungsraum zu verdampfen sind. Der Brennerkopf ist an Zuführungsleitungen für Brenngas und Oxidationsmittel in einfacher Weise anschließbar. Die Ausbildung und Anordnung der hierfür vorzusehenden Zuströmöffnungen zu den Strömungskanälen wird durch teilweises Abtragen der Deckwandungen des Brennerkopfes den gewünschten Anforderungen angepaßt.

Eine vorteilhafte Weiterbildung des Brennerkopfes gemäß der Erfindung ist in Patentansprüchen 2 bis 4 angegeben. Danach weist der Brennerkopf unmittelbar vor Eintritt des Brenngases in den Brennerkopf eine Vorwärmzone für das Oxidationsmittel auf. Die Vorwärmzone ist als rekuperativer Wärmetauscher ausgebildet, wobei das Heizmedium in Strömungskanälen geführt wird, die in vorteilhafter Weise mit den Strömungskanälen für das Brenngas fluchtend im Brennerkopf angeordnet und von letzterem durch eine Trennwand gasdicht abgeschlossen sind. Als Heizmedium für die Vorerhitzung des Oxidationsmittels wird bevorzugt aus dem Verbrennungsraum abströmendes Abgas verwendet.

Weitere Ausgestaltungen der Erfindung sind in Patentansprüchen 5 und 6 angegeben. Die Merkmale einer Variante der Erfindung werden in Patentanspruch 7 gekennzeichnet. Die Ausgestaltungen der Erfindung nach Patentansprüchen 4 bis 6 sind auch für diese Variante zutreffend.

Die Erfindung wird anhand von Ausführungsbeispielen, die in der Zeichnung schematisch wiedergegeben sind, näher erläutert. Es zeigt im einzelnen

Fig. 1 Brennerkopf in perspektivischer Darstellung,

Fig. 2 Brennerkopf mit Vorwärmzone für das Oxidationsmittel und seitlichem Austritt von Brenngas und Oxidationsmittel in den Verbrennungsraum,

Fig. 3 Querschnitt des Brennerkopfes nach Fig. 2 gemäß Schnittlinie III/III,

Fig. 4 Brennerkopf mit Vorwärmzone für das Oxidationsmittel und stirnseitigem Austritt von Brenngas und Oxidationsmittel in den Verbrennungsraum,

Fig. 5 Erhitzer mit Brennerkopf,

Fig. 6 Erhitzer mit mehreren ringförmig angeordneten Brennerköpfen,

Fig. 7 Brennerdüse mit eingesetzten Brennerköpfen,

Fig. 8 Brennerkopf mit verlängerter Erhitzungszone für das Brenngas.

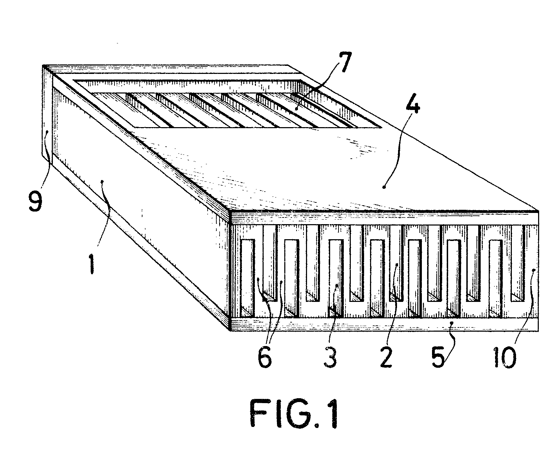

Wie aus Fig. 1 ersichtlich ist, besteht der Brennerkopf in einfachster Weise aus einem keramischen Stein 1 mit Strömungskanälen 2, 3 sowie aus die Strömungskanäle in ihrer Länge abdeckende Deckwandungen 4, 5. Die Strömungskanäle 2, 3 weisen einen gestreckten Querschnitt auf und sind im Ausführungsbeispiel als rechteckig geformte, im Stein 1 geradlinig verlaufende etwa 1 mm breite Schlitze gestaltet. Die Strömungskanäle sind parallel zueinander geführt und paarweise gegeneinander versetzt angeordnet, wobei jeweils zwischen benachbarten Strömungskanälen eine Trennwand 6 gebildet ist, die für einen Wärmeaustausch zwischen den in den Strömungskanälen strömenden Medien geeignet ist. Die Wandstärke der Trennwand läßt sich bis auf 0,3 mm verringern. Zuströmöffnungen 7, 8 für die Strömungskanäle 2, 3 werden durch Absetzen der Deckwandungen 4, 5 geschaffen. Die Deckwandungen werden so weit abgesetzt, daß jeweils die die benachbarten Strömungskanäle zur abzusetzenden Deckwandung hin überragenden Strömungskanäle geöffnet sind. Durch Absetzen der Deckwandung 4 werden auf diese Weise Zuströmöffnungen 7 für die Strömungskanäle 2, durch Absetzen der Deckwandungen 5 Zuströmöffnungen 8 für die Strömungskanäle 3 gebildet. In Fig. 1 sind die Zuströmöffnungen 8 auf der in der perspektivischen Darstellung verdeckten Seite des Brennerkopfes vorgesehen. An der den Mündungen der Strömungskanäle in den Verbrennungsraum entgegengesetzt liegenden Stirnseite des Brennerkopfes sind die Strömungskanäle verschlossen. Im Ausführungsbeispiel ist ein gasdichter Verschluß 9 angebracht. Über die Zuströmöffnungen 7 strömt in den Brennerkopf als Oxidationsmittel Luft, über die Zuströmöffnungen 8 ein Brenngas ein. Nach Austritt aus den Mündungen der Strömungskanäle 2, 3 an der Stirnseite 10 des Brennerkopfes vermischen sich Oxidationsmittel und Brenngas zu einem zündbaren Gasgemisch. Dabei ist die Flammenzone des gezündeten Gasgemisches so ausgebildet, daß eine Erhitzung des Brennerkopfes selbst durch das gezündete Gasgemisch verhältnismäßig gering bleibt. Die Temperatur des Brennerkopfes wird in erster Linie von der Temperatur des vorerhitzten Oxidationsmittels bestimmt.

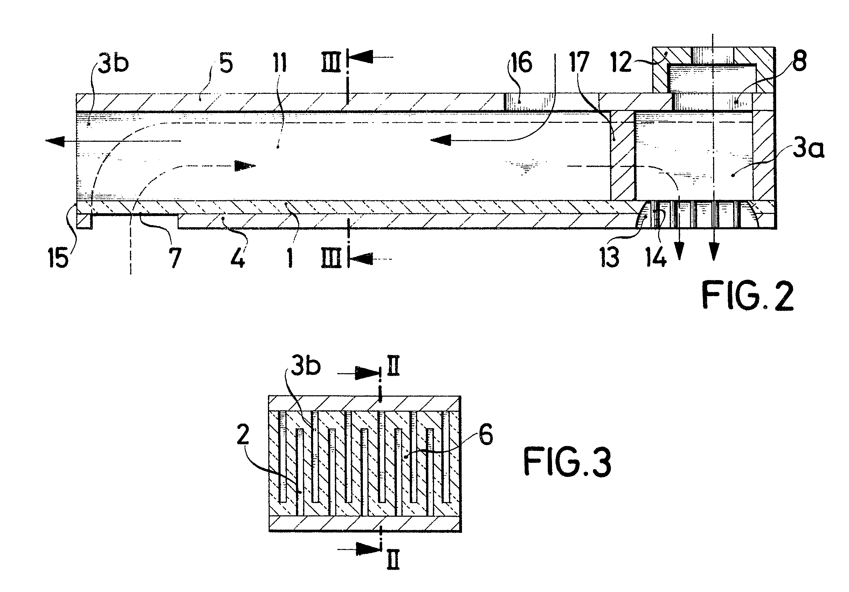

Fig. 2 zeigt einen Brennerkopf mit Vorwärmzone 11 für das Oxidationsmittel. Die Vorwärmzone ist als rekuperativer Wärmetauscher ausgebildet. Das Brenngas wird dem Brennerkopf über einen Verteiler 12 zugeführt, der Zuströmöffnungen 8 von Strömungskanälen 3a überdeckt. Das Brenngas, dessen Strömungsrichtung in Fig. 2 durch einen strichpunktierten Strömungspfeil eingezeichnet ist, strömt aus dem Brennerkopf zusammen mit dem Oxidationsmittel seitlich an der Austrittsstelle 13 aus. Zu diesem Zweck ist an dieser Stelle des Brennerkopfes nicht nur die Deckwandung 4, sondern auch der Stein 1 so weit abgesetzt, daß alle Strömungskanäle 2, 3a geöffnet sind. Um eine gleichmäßige Vermischung zwischen Brenngas und Oxidationsmittel bei seitlichem Austritt aus dem Brennerkopf zu erreichen, sind an der Austrittsstelle 13 Strömungsführungen 14 vorgesehen, die insbesondere den freien Strömungsquerschnitt der Strömungskanäle für das Brenngas an der Austrittsstelle 13 verengen.

Die Strömungskanäle 2 für das Oxidationsmittel sind beim Brennerkopf nach Fig. 2 durch die Vorwärmzone 11 des Brennerkopfes hindurchgeführt. Die Zuströmöffnungen 7 für die Strömungskanäle 2 befinden sich im Bereich der dem Verbrennungsraum abgewandten Stirnseite 15 des Brennerkopfes. An dieser Stelle ist die Deckwandung 4 so weit abgesetzt, daß die Strömungskanäle 2 geöffnet sind. Mit den Strömungskanälen 3a im Stein 1 fluchtend verlaufende Strömungskanäle 3b dienen zur Führung eines Heizmediums, das durch die durch Absetzen der Deckwandung 5 gebildeten Zuströmöffnungen 16 in die Vorwärmzone 11 des Brennerkopfes einströmt. Zwischen den fluchtend angeordneten Strömungskanälen 3a und 3b befinden sich die Kanäle gegen einander gasdicht abschließende Trennwände 17.

In der Vorwärmzone 11 des Brennerkopfes strömen die im Wärmeaustausch stehenden Medien im Gegenstrom. Die Strömungsrichtung für das Heizmedium ist in Fig. 2 durch einen Pfeil mit ausgezogener Linie, die Strömungsrichtung für das Oxidationsmittel durch einen Pfeil mit strichliniertem Linienzug gekennzeichnet. Das Heizmedium strömt aus der Vorwärmzone 11 an der Stirnseite 15 aus. Die Strömungskanäle 2 für das Oxidationsmittel sind an dieser Strinseite verschlossen.

Ein Querschnitt durch die Vorwärmzone 11 des Brennerkopfes zeigt Fig. 3. Daraus ist ersichtlich, daß die Ausbildung der Vorwärmzone der Ausbildung des vorderen Teils des Brennerkopfes entspricht, den Brenngas und aufgeheiztes Oxidationsmittel durchströmen.

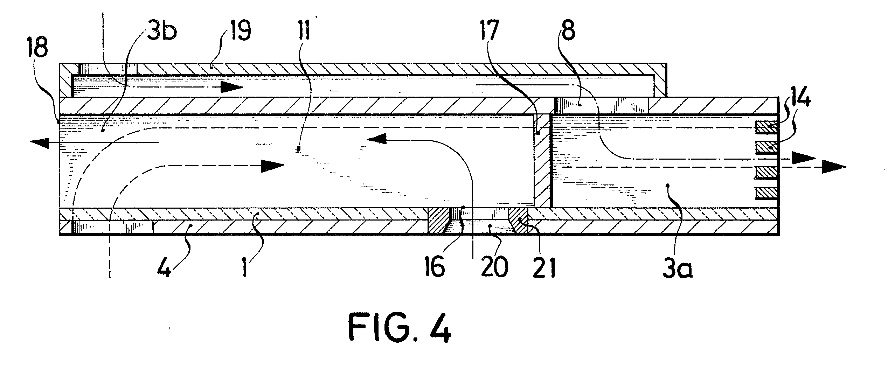

Ein Brennerkopf mit verlängerter Erhitzungszone für das Brenngas zeigt Fig. 4. Die Zuströmöffnungen 8 für das Brenngas sind so weit von den Mündungen der Strömungskanäle 2 und 3a entfernt angeordnet, daß gegebenenfalls auch flüssige Brennstoffe, die dem Brennerkopf zugeführt werden, vor Eintritt in den Verbrennungsraum in den Strömungskanälen 3a verdampfen. Der Brennerkopf nach Fig. 4 weist eine zu dessen rückwärtiger Stirnseite 18 geführte Strömungsleitung 19 für das Brenngas oder für flüssigen Brennstoff auf.

Das Heizmedium zur Vorerhitzung des Oxidationsmittels wird in die Vorwärmzone 11 des Brennerkopfes über einen mit Zuströmöffnungen 20 versehenen Verteiler 21 eingeführt. Der Verteiler ist derart ausgebildet, daß die an dieser Stelle durch Absetzen der Deckwandung 4 und des keramischen Steins 1 geöffneten Strömungskanäle 2 und 3b in der Weise wieder abgedeckt werden, daß Zuströmöffnungen 16 für das Heizmedium verbleiben. Zwischen den Strömungskanälen 3b und den Strömungskanälen 3a, die in gleicher Weise wie beim Brennerkopf nach Fig. 2 im Stein 1 fluchtend angeordnet sind, sind auch Trennwände 17 eingesetzt.

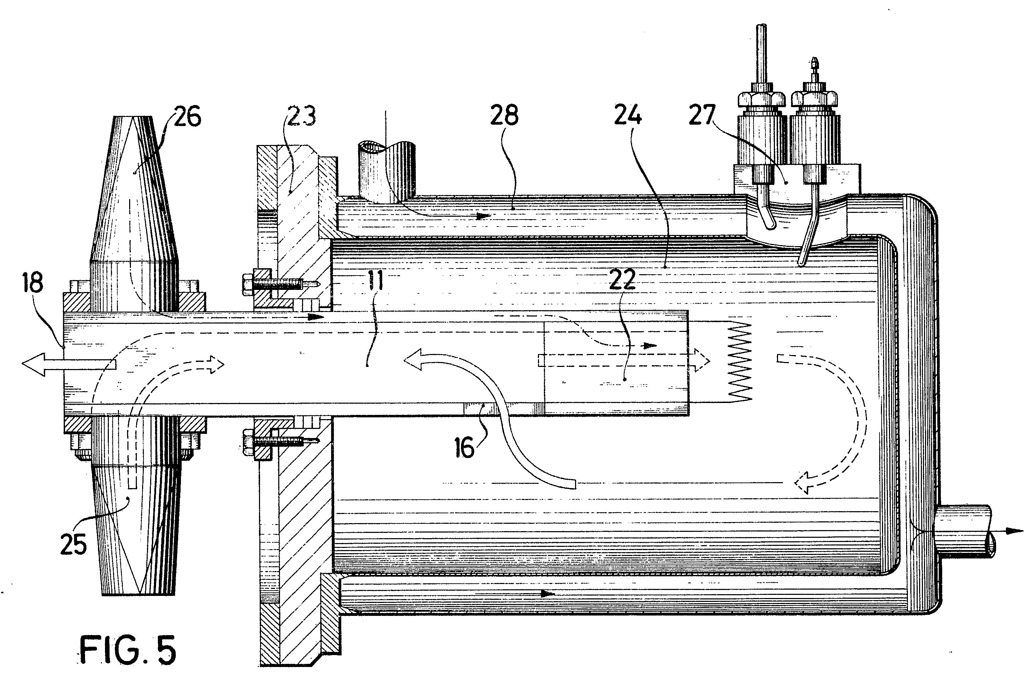

Einen in einen Erhitzer, beispielsweise für Wasser oder Dampf, eingebauten Brennerkopf 22 zeigt Fig. 5. Der Aufbau dieses Brennerkopfes entspricht dem in Fig. 4 dargestellten Ausführungsbeispiel. Der Brennerkopf 22 ist durch eine Stirnplatte 23 in den Erhitzer eingeführt und ragt in dessen Brennkammer 24 so weit hinein, daß die Zuströmöffnungen 16 im Bereich des aus der Brennkammer abströmenden Abgases liegen. Das Abgas durchströmt zur Vorerhitzung des Oxidationsmittels die Vorwärmzone 11 des Brennerkopfes 22 und wird an dessen Stirnseite 18 abgezogen. Als Oxidationsmittel wird dem Brennerkopf Verbrennungsluft über eine Leitung 25 zugeführt, das Brenngas strömt über die Brenngasleitung 26 zum Brennerkopf. Im Bereich des zündfähigen Gasgemisches weist der Erhitzer eine Zündeinrichtung 27 auf. Das zu erhitzende Medium wird im Erhitzer in Leitungen 28 im Brennraum 24 geführt.

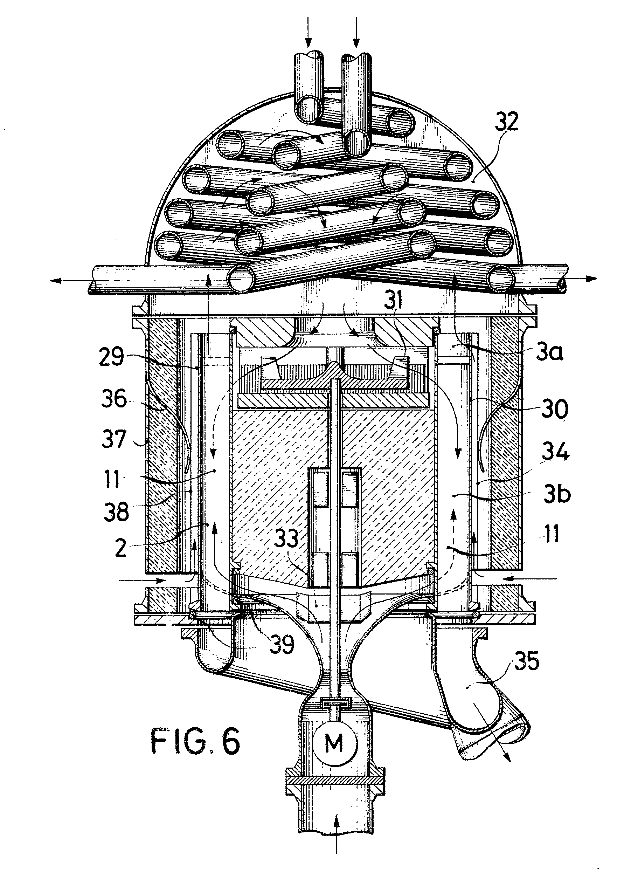

Ein weiteres Ausführungsbeispiel für den Einbau von Brennerköpfen in Erhitzern zeigt Fig. 6. Bei diesem Erhitzer sind mehrere Brennerköpfe, von denen die Brennerköpfe 29, 30 dargestellt sind, ringförmig um eine koaxial zu den Brennerköpfen gelagerte Turbine 31 angeordnet. Die Turbine 31 wird von dem aus einem Brennraum 32 abfließenden Abgas vor dessen Eintritt in die Vorwärmzonen 11 der Brennerköpfe 29, 30 durchströmt. Die Turbine 31 treibt ein Gebläse 33 an, mit dem im Ausführungsbeispiel Luft als Oxidationsmittel für die Brennerköpfe angesaugt wird. In Fig. 6 ist auf der linken Seite der Abbildung der das Oxidationsmittel führende Strömungskanal 2 des Brennerkopfes 29 dargestellt, der rechte Teil der Abbildung zeigt den Strömungskanal 3a für das über eine Zuführung 34 in den Brennerkopf eingeführte Brenngas sowie den Strömungskanal 3b, den das aus der Turbine 31 abströmende Abgas durchströmt. Für den Abzug des Abgases ist ein Abgaskanal 35 vorgesehen.

Die ringförmig angeordneten Brennerköpfe 29, 30 werden im Erhitzer nach Fig. 6 in ihrer Lage durch Federelemente 36 gehalten, die am Gehäuse 37 des Erhitzers befestigt sind und die ringförmig angeordneten Brennerköpfe, die sich gegeneinander abstützen, an deren dem Gehäuse 37 zugewandten äußeren Wandseite 38 andrücken. Zum gasdichten Abschluß der Brennerköpfe 29, 30 sind Dichtelemente 39 vorgesehen.

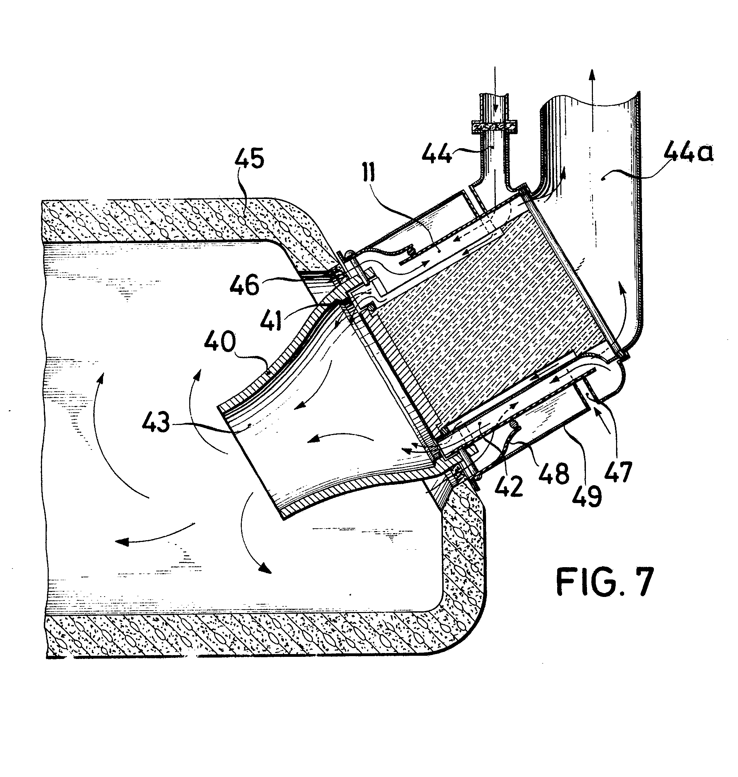

Eine Brennerdüse 40 mit eingesetzten Brennerköpfen ist in Fig. 7 dargestellt. Die Brennerköpfe, von denen in der Zeichnung die Brennerköpfe 41 und 42 dargestellt sind, sind im Brennraum 43 der Brennerdüse 40 in gleicher Weise wie im Ausführungsbeispiel nach Fig. 6 ringförmig angeordnet. Zur Vorerhitzung des durch eine Leitung 44 zugeführten Oxidationsmittels strömt aus einem in der Zeichnung nur schematisch wiedergegebenen Ofen 45 die Abluft nach Durchtritt durch Filter 46 in die Vorwärmzonen 11 der Brennerköpfe 41, 42 ein. Das Brenngas wird über Zuleitungen 47 in die Brennerköpfe eingeführt.

Die Brennerköpfe 41, 42 werden in ihrer Lage in gleicher Weise wie im Ausführungsbeispiel nach Fig. 6 mittels Federelementen 48 gehalten, die am Gehäuse 49 befestigt sind und die Brennerköpfe aneinanderdrücken. Dichtelemente sorgen für einen gasdichten Abschluß der Brennerköpfe. Das Abgas wird nach Durchströmung der Brennerköpfe zur Vorerhitzung des Oxidationsmittels über einen Abzug 44a abgeführt.

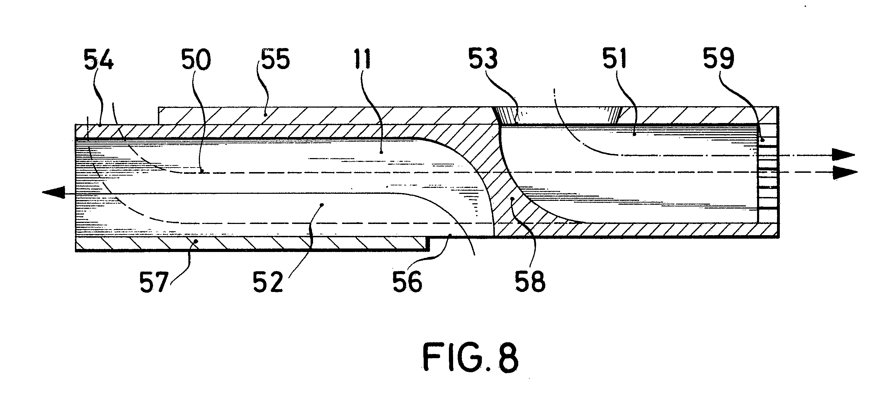

In Fig. 8 ist ein Ausführungsbeispiel für eine Variante der Erfindung wiedergegeben. Bei diesem Brennerkopf verlaufen die Strömungskanäle für Oxidationsmittel und Brenngas, die in Fig. 8 mit Bezugszeichen 50, 51 bezeichnet sind, im Brennerkopf in gleicher Höhe parallel zueinander. Versetzt gegenüber diesen Strömungskanälen ist bei diesem Brennerkopf lediglich der Strömungskanal 52 für das Heizmedium angeordnet. Der Querschnitt der Vorwärmzone 11 des in Fig. 8 dargestellten Brennerkopfes entspricht daher dem in Fig. 3 gezeichneten Querschnitt. Infolge dieser Ausbildung entstehen Zuströmöffnungen 53 für das Brenngas und Zuströmöffnungen 54 für das Oxidationsmittel dadurch, daß die die Strömungskanäle 50, 51 abdeckende Deckwand 55 an zwei Stellen abgesetzt wird. Zuströmöffnungen 56 für das in die Vorwärmzone einzuführende Heizmedium werden durch Absetzen der Deckwandung 57 gebildet. Im übrigen entspricht der Brennerkopf nach Fig. 8 den bereits beschriebenen Ausführungsbeispielen. Die Strömungskanäle 50 für das Oxidationsmittel durchziehen den Brennerkopf geradlinig von dessen Vorwärmzone 11 bis hin zu ihrer Mündung in den Verbrennungsraum. Die Strömungskanäle 51 für das Brenngas und die Strömungskanäle 52 für das Heizmedium sind im Brennerkopf fluchtend angeordnet, wobei zwischen beiden Strömungskanälen eine Trennwand 58 ausgebildet ist. Im Mündungsbereich der Strömungskanäle 50, 51 sind Strömungsführungen 59 angeordnet, die den freien Strömungsquerschnitt der Strömungskanäle 51 verengen und damit die Erzeugung von Gasgemischen mit hohem Luftüberschuß ermöglichen.

Die Herstellung der keramischen Brennerköpfe gemäß der Erfindung erfolgt in an sich bekannter Weise durch Fräsen keramischer Steine, wobei die Strömungskanäle für Oxidationsmittel, Brenngas und Heizmedium in den Stein von zwei gegenüberliegenden Seiten her eingefräst werden.

Die Strömungskanäle werden durch Aufgarnieren der Deckwandungen abgedeckt, die an den zur Ausbildung der Zuströmöffnungen für die Medien vorgesehenen Bereichen abgesetzt sind. Abschließend werden die Stirnseiten der Strömungskanäle soweit erforderlich geschlossen und in die Mündungen Strömungsleitstücke eingesetzt, die den Austrittsquerschnitt der das Brenngas führenden Strömungskanäle verengen. Die fertigen Brennerköpfe werden nachgebrannt.

Bei Verwendung der erfindungsgemäßen Brennerköpfe aus Keramik ist eine Vorwärmung der als Oxidationsmittel verwendeten Verbrennungsluft bis über 800°C möglich, so daß die Gase mit hohem Luftüberschuß auf hohe Temperaturen gebracht werden können.

## Patentansprüche

1. Keramischer Brennerkopf zur getrennten Zufuhr von Brenngas und Oxidationsmittel zum Verbrennungsraum mittels mehreren, im Brennerkopf parallel zueinander geführten und nebeneinander angeordneten, in den Verbrennungsraum mündenden Strömungskanälen für Brenngas und Oxidationsmittel, wobei die Strömungskanäle einen gestreckten Querschnitt aufweisen und paarweise gegeneinander versetzt angeordnet sind, dadurch gekennzeichnet, daß jeder Strömungskanal (2, 3) über seine gesamte Länge die ihm nebengeordneten Strömungskanäle (3, 2) zu einer der beiden Deckwandungen (4, 5) hin überragt, und daß zur Bildung von Zuströmöffnungen (7, 8) für die das Oxidationsmittel oder das Brenngas führenden Strömungskanäle (2, 3) ein Teil zumindest einer der Deckwandungen (4, 5) so weit abgesetzt ist, daß jeweils die die benachbarten Strömungskanäle (3, 2) zur abzusetzenden Deckwandung hin überragenden Strömungskanäle (2, 3) geöffnet sind und daß die in dieser Weise geöffneten Strömungskanäle an ihrer dem Verbrennungsraum abgewandten Stirnseite verschlossen sind, wobei zwischen benachbarten Strömungskanälen (2, 3) einem Wärmetausch zwischen Oxidationsmittel und Brenngas dienende Trennwände (6) gebildet werden.

2. Keramischer Brennerkopf nach Anspruch 1, dadurch gekennzeichnet, daß die das Oxidationsmittel führenden Strömungskanäle (2) an einen das Oxidationsmittel vor Eintritt in den Brennerkopf erhitzenden Wärmetauscher (11) angeschlossen sind.

3. Keramischer Brennerkopf nach Anspruch 1 oder 2, dadurch gekennzeichnet, daß die den Strömungskanälen (2) für das Oxidationsmittel benachbarten Strömungskanäle (3) in ihrem dem Verbrennungsraum zugewandten Bereich (3a) Brenngas und in einem davon durch eine Trennwand (17) abgeschlossenen, zur Eintrittsseite des Oxidationsmittels hin erstreckten Bereich (3b) ein Heizmedium führen.

4. Keramischer Brennerkopf nach Anspruch 3, dadurch gekennzeichnet, daß den das Heizmedium führenden Strömungskanälen (3b) aus dem Verbrennungsraum abströmendes Verbrennungsgas zugeführt wird.

5. Keramischer Brennerkopf nach einem der vorhergehenden Ansprüche, dadurch gekennzeichnet, daß mehrere Brennerköpfe ringförmig angeordnet sind.

6. Keramischer Brennerkopf nach Anspruch 4 oder 5, dadurch gekennzeichnet, daß das aus dem Verbrennungsraum abströmende Verbrennungsgas vor Eintritt in die das Heizmedium führenden Strömungskanäle (3b) eine Gasturbine (31) zum Antrieb eines das Oxidationsmittel ansaugenden Gebläses (33) durchströmt.

7. Keramischer Brennerkopf zur getrennten Zufuhr von Brenngas und Oxidationsmittel zum Verbrennungsraum mittels mehreren, im Brennerkopf parallel zueinander geführten und paarweise nebeneinander angeordneten, in den Verbrennungsraum mündenden Strömungskanälen für Brenngas und Oxidationsmittel, wobei die Strömungskanäle einen gestreckten Querschnitt aufweisen, dadurch gekennzeichnet, daß zwischen benachbarten Strömungskanälen einem Wärmeaustausch zwischen den in den Strömungskanälen geführten Medien dienende Trennwände (6) gebildet sind, und daß die Strömungskanäle (50) für das Oxidationsmittel durch einen der Vorwärmung des Oxidationsmittels dienenden rekuperativen Wärmetauscher (11) hindurchgeführt sind, wobei Heizmedium führende Strömungskanäle (52) mit den Strömungskanälen (51) für das Brenngas fluchtend und von letzteren durch eine Trennwand (58) getrennt im Brennerkopf angeordnet sind.

## Claims

1. Ceramic burner head for the separate feeding of combustible gas and oxidising agent into a combustion chamber by means of a plurality of flow ducts for combustible gas and oxidising agent which extend parallel to one another in the burner head, are arranged adjacent one another, and open into the combustion chamber, wherein the flow ducts have an elongated cross-section and are situated offset relatively to one another in pairs, characterised in that each flow duct (2, 3) over its entire length projects beyond the flow ducts (3, 2) adjacent to it towards one of the two covering walls (4, 5), and that to form inlet apertures (7, 8) for the flow ducts (2, 3) conducting the oxidising agent or the combustible gas a part of least of one of the covering walls (4, 5) is taken away to such an extent that the respective flow ducts (2, 3) projecting above the neighbouring flow ducts (3, 2) towards the taken-away wall region are opened up, and that the flow ducts opened up in this way are closed at their end remote from the combustion chamber, wherein partition walls (6) serving for heat exchange between oxidising agent and combustible gas are formed between neighbouring flow ducts (2, 3).

2. Ceramic burner head according to claim 1, characterised in that the flow ducts (2) conducting the oxidising agent are connected to a heat exchanger (11) heating the oxidising agent before introduction into the burner head.

3. Ceramic burner head according to claim 1 or 2, characterised in that the flow ducts (3) adjoining the flow ducts (2) for the oxidising agent conduct combustible gas in their region (3a) directed towards the combustion chamber and conduct a heating medium in a region (3b) which is closed off from the first region by a partition wall (17) and extends towards the entry side for the oxidising agent.

4. Ceramic burner head according to claim 3, characterised in that combustion gas flowing out of the combustion chamber is supplied to the flow ducts (3b) conducting the heating medium.

5. Ceramic burner head according to one of the preceding claims, characterised in that a plurality of burner heads are arranged in an annular formation.

6. Ceramic burner head according to claim 4 or 5, characterised in that before entry into the flow ducts (3b) conducting the heating medium the combustion gas flowing out of the combustion chamber flows through a gas turbine (31) for driving a fan (33) aspirating the oxidising agent.

7. Ceramic burner head for separate feeding of combustible gas and oxidising agent to the combustion chamber by means of a plurality of flow ducts for combustible gas and oxidising agent which are situated adjacent to one another in pairs and parallel to one another in the burner head, and open into the combustion chamber, said flow ducts having an elongated cross-section, characterised in that partition walls (6) serving for heat exchange between the media conducted in the flow ducts are formed between neighbouring flow ducts, and that the flow ducts (50) for the oxidising agent extend through a recuperative heat exchanger (11) used for the preheating of the oxidising agent, and flow ducts (52) conducting heating medium are arranged in the burner head in alignment with the flow ducts (51) for the combustible gas and separated therefrom by a partition wall (58).

## Revendications

1. Tête de brûleur céramique pour l'alimentation séparée en gaz combustible et en agent d'oxydation de la chambre de combustion au moyen de plusieurs canaux d'écoulement du gaz combustible et de l'agent d'oxydation, dirigés parallèlement les uns aux autres et côte à côte dans la tête de combustion et débouchant dans la chambre de combustion, les canaux d'écoulement ayant une section droite étendue et étant décalés par paire les uns par rapport aux autres, caractérisée en ce que chaque canal d'écoulement (2, 3) dépasse, sur toute sa longueur, vers l'une des deux parois de recouvrement (4, 5), les canaux d'écoulement (3, 2) qui sont disposés à côté de lui, et en ce que, pour former des ouvertures d'entrée (7, 8) pour les canaux d'écoulement (2, 3) pour l'agent d'oxydation ou pour le gaz combustible, l'une au moins des parois de recouvrement (4, 5) est interrompue partiellement au point que les canaux d'écoulement (2, 3), dépassant les canaux d'écoulement (3, 2) voisins vers la paroi de recouvrement interrompue, soient ouverts et en ce que les canaux d'écoulement ainsi ouverts soient fermés sur leur côté frontal éloigné de la chambre de combustion, des cloisons de séparation (6) servant à un échange de chaleur entre l'agent d'oxydation et le gaz combustible étant formées entre des canaux d'écoulement (2, 3) voisins.

2. Tête de brûleur céramique suivant la revendication 1, caractérisée en ce que les canaux d'écoulement (2) pour l'agent d'oxydation sont raccordés à un échangeur de chaleur (11) chauffant l'agent d'oxydation avant l'entrée dans la tête de brûleur.

3. Tête de brûleur céramique suivant la revendication 1 ou 2, caractérisée en ce que les canaux d'écoulement (3) voisins des canaux d'écoulement (2) pour l'agent d'oxydation conduisent, dans leur tronçon (3a) se trouvant du côté de la chambre de combustion, du gaz combustible et, dans un tronçon (3b) isolé du tronçon (3a) par une cloison de séparation (17) et s'étendant vers le côté de l'entrée de l'agent d'oxydation, un milieu de chauffage.

4. Tête de brûleur céramique suivant la revendication 3, caractérisée en ce que du gaz de combustion, sortant de la chambre de combustion, est envoyé aux canaux d'écoulement (3b) dans lesquels passe le milieu de chaffage.

5. Tête de brûleur céramique suivant l'une des revendications précédentes, caractérisée en ce que plusieurs têtes de brûleurs sont disposées annulairement.

6. Tête de brûleur céramique suivant la revendication 4 ou 5, caractérisée en ce que le gaz de combustion sortant de la chambre de combustion traverse, avant d'entrer dans les canaux d'écoulement (3b) pour le milieu de chaffage, une turbine à gaz (31) destinée à entraîner un ventilateur (33) aspirant l'agent d'oxydation.

7. Tête de brûleur céramique pour l'alimentation séparée en gaz combustible et en agent d'oxydation de la chambre de combustion au moyen de plusieurs canaux d'écoulement du gaz combustible et de l'agent d'oxydation dirigés parallèlement les uns aux autres et disposés côte à côte par paire dans la tête de combustion et débouchant dans la chambre de combustion, les canaux d'écoulement ayant une section droite étendue, caractérisée en ce qu'entre des canaux d'écoulement voisins sont formées des cloisons de séparation (6) servant d'échangeur de chaleur entre les milieux passant dans les canaux d'écoulement, et en ce que les canaux d'écoulement (50) de l'agent d'oxydation passent dans un échangeur de chaleur (11) à récupération servant à chauffer, au préalable, l'agent d'oxydation, les canaux d'écoulement (52) du milieu de chauffage étant alignés avec les canaux d'écoulement (51) du gaz combustible et étant disposés dans la tête de brûleur en étant séparés de ces derniers par une cloison de séparation (58).

FIG.1

FIG.2

FIG.3

FIG. 4

FIG. 5

FIG. 6

FIG. 7

0 012 308

FIG.8